# EUROPÄISCHE PATENTANMELDUNG

(11) **EP 1 504 951 A2**
(43) Veröffentlichungstag der Anmeldung: **09.02.2005**
(21) Anmeldenummer: 04018076.2
(22) Anmeldetag: 30.07.2004
(51) Int. Cl.: B60N 2/20, B60N 2/30

(54) **Fahrzeugsitz, insbesondere Kraftfahrzeugsitz**

(30) Priorität: 05.08.2003 DE 10335749
(71) Anmelder: KEIPER GmbH & Co. KG, 67657 Kaiserslautern (DE)
(72) Erfinder: Buhl, Karl-Heinz, 67657 Kaiserlautern (DE)
(74) Vertreter: Patentanwälte Hosenthien-Held und Dr. Held

(57) **Zusammenfassung**

Bei einem Fahrzeugsitz, insbesondere einem Kraftfahrzeugsitz, mit einem Sitzteil (3), einer Lehne (4), die mittels wenigstens eines Lehnenbeschlags (5) relativ zum Sitzteil (3) schwenkbar ist, wenigstens einem Bodenschloß (11) zum lösbaren Verriegeln des Sitzteils (3) mit der Fahrzeugstruktur, und wenigstens einem Sperrmittel (21), das den Lehnenbeschlag (5) verriegelt hält, wenn das Bodenschloß (11) entriegelt ist, ist das Sperrmittel (21) für den Lehnenbeschlag (5) am Bodenschloß (11) angeordnet.

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der DE 195 14 380 C2 bekannten Fahrzeugsitz dieser Art sitzt das Sperrelement für die Lehne direkt am Lehnenbeschlag, ist diesem parallel geschaltet, fragt direkt die Stellung der Lehne ab und sperrt diese gegebenenfalls. Über ein Zugmittel wird Weg freigegeben, so daß das Bodenschloß bei vorgeschwenkter Lehne entriegelt werden kann. Die Konstruktion ist relativ aufwendig und enthält noch Freiheitsgrade.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß das Sperrmittel für den Lehnenbeschlag am Bodenschloß angeordnet ist, wird durch die räumliche Nähe die Abfrage des Verriegelungszustandes des Bodenschlosses erleichtert, insbesondere wenn das Sperrmittel zugleich als Abfragemittel hierfür ausgebildet ist. Es ist zusätzlich eine Erhöhung auf drei Funktionen für das Sperrmittel möglich, indem das Sperrmittel bei entriegeltem Lehnenbeschlag das Bodenschloß verriegelt hält. Das Bodenschloß ist vorzugsweise durch ein bewegliches, beispielsweise schwenkbares Entriegelungsmittel entriegelbar, welches mit dem relativ zum Bodenschloß beweglich gelagerten Sperrmittel zusammenwirkt. Damit kann die Abfragefunktion für den Verriegelungszustandes des Bodenschlosses durch Abfragen der Position des Entriegelungsmittels und die Sperrfunktion für das Bodenschloß durch Sperren des Entriegelungsmittels erreicht werden.

Vorzugsweise weist das Bodenschloß zwei stabile Schaltzustände auf, so daß mit einer eindeutigen Abfrage nicht nur ein eindeutiges Sperren in einigen Endstellungen, sondern auch in allen Zwischenstellungen erfolgen kann. Die Ausübung der Sperrwirkung auf lediglich den Entriegelungsmechanismus, was vorzugsweise durchgängig sowohl beim Bodenschloß als auch beim Lehnenbeschlag verwirklicht ist, reduziert die Kräfte gegenüber einem direkten Sperren der jeweiligen Komponenten, wie im Stand der Technik offenbart. Das Entriegelungsmittel nimmt vorzugsweise in Abhängigkeit des Schaltzustandes des Bodenschlosses unterschiedliche Positionen ein und bewegt sich beim Wechsel des Schaltzustandes sich auf einer Bahn von einer Position in die andere.

Das Sperrmittel weist vorzugsweise zwei Anschläge zum Zusammenwirken mit dem Entriegelungsmittel auf, wobei der Bereich zwischen den beiden Anschläge sich in der Ausgangsposition, d.h. bei verriegeltem Lehnenbeschlag, vorzugsweise mit der Bahn des Entriegelungsmittels deckt. Je nach Anlage eines Anschlages auf derjenigen Seite des Entriegelungsmittels, die von der anderen Position abgewandt oder zugewandt ist, wird das Entriegelungsmittel durch das Sperrmittel freigegeben bzw. gesperrt, was die Sperrfunktion für das Bodenschloß ergibt. Umgekehrt wird auch das Sperrmittel durch das Entriegelungsmittel gesperrt bzw. freigegeben, was die Abfragefunktion für das Bodenschloß ergibt. Durch die beispielsweise durch ein Zugmittel zur Verfügung gestellte Wirkverbindung mit dem Lehnenbeschlag kann die Abfragefunktion direkt in die Sperrfunktion für den Lehnenbeschlag umgesetzt werden. Das Zugmittel wirkt dabei vorzugsweise auf die Lehnenentriegelung ein, bei welcher beispielsweise ein Hebel oder ein Bolzen als Schnittstelle dient. Das Sperrmittel nimmt vorzugsweise nur während des entriegelten Zustandes des Lehnenbeschlags eine von seiner Ausgangsposition abweichende Position ein, in welcher sich der Bereich zwischen den Anschlägen nicht mehr mit der Bahn des' Entriegelungsmittels deckt und das Entriegelungsmittel von der Berandung seiner Bahn und einem der Anschläge des Sperrmittels fixiert wird.

Im folgenden ist die Erfindung anhand eines in der Zeichnung dargestellten Ausführungsbeispiels näher erläutert. Es zeigen
- Fig. 1: eine Teilansicht des Ausführungsbeispiels im Bereich des hinteren Fußes im verriegelten Zustand des Bodenschlosses,
- Fig. 2: eine teilweise schematische Außenansicht des Ausführungsbeispiels mit vorgeschwenkter Lehne und entriegeltem Bodenschloß,
- Fig. 3: eine nur teilweise dargestellte Innenansicht des Ausführungsbeispiels entsprechend Fig. 2,
- Fig. 4: eine schematische Darstellung des Ausführungsbeispiels in der Gebrauchsstellung, und
- Fig. 5: eine schematische Darstellung des Ausführungsbeispiels in der Packagestellung.

Ein Fahrzeugsitz 1 für eine hintere Sitzreihe eines Kraftfahrzeuges weist ein Sitzteil 3 und eine Lehne 4 auf, welche mittels Lehnenbeschlägen 5 relativ zum Sitzteil 3 schwenkbar ist. Die Lehnenbeschläge 5 sind dabei an den tragenden Strukturen angebracht, nämlich einerseits an der gelenkig aufgebauten Sitzteilstruktur 7 und andererseits an der Lehnenstruktur 8. An der Sitzteilstruktur 7 ist auf beiden Fahrzeugsitzseiten im Bereich eines hinteren Fußes 9 ein Bodenschloß 11 angebracht, welches den Fahrzeugsitz 1 mit dem Fahrzeugboden, insbesondere einem fahrzeugstrukturfesten Bolzen, lösbar verriegelt. Ein vergleichbares Schloß ist jeweils im Bereich eines vorderen Fußes 13 vorgesehen, welcher zugleich eine Schwenkachse für die Sitzteilstruktur 7 darstellt.

Das Bodenschloß 11 hat in an sich bekannter Weise zwei stabile Schaltzustände, und zwar einen verriegelten Zustand und einen entriegelten Zustand. Im verriegelten Zustand umschließt eine Klinke 15 des Bodenschlosses 11 zusammen mit Gehäuseteilen des Bodenschlosses 11 den fahrzeugstrukturfesten Bolzen, wobei im Normalfall ein vorgespannter Spannexzenter die Klinke 15 gegen ein Öffnen sichert und im Crashfall ein Fangstück die Klinke 15 abstützt. Im entriegelten Zustand ist die Klinke 15 für den fahrzeugstrukturfesten Bolzen aufnahmebereit und wird aufgrund von Selbsthemmung durch ihre genannten Sicherungselemente offengehalten. Auf dem Fangstück sitzt fest ein Entriegelungsbolzen 17, der als Entriegelungsmittel dient. Das Entriegeln, also das Umschalten in den entriegelten Zustand, erfolgt durch Schwenken des Entriegelungsbolzens 17 aus einer oberen, ersten Position in eine untere, zweite Position entlang einer Bahn, für welche in der Sitzteilstruktur 7 eine Kulisse 19 ausgespart ist. Über das Fangstück wird der Spannexzenter und die Klinke 15 aufgezogen. Der Entriegelungsbolzen 17 bleibt in seiner unteren, zweiten Position. Das Verriegeln, d.h. das Umschalten in den verriegelten Zustand, erfolgt, indem der fahrzeugstrukturfeste Bolzen sich in die Klinke 15 drückt und diese so lange schwenkt, bis aufgrund der Federbelastungen der Spannexzenter und das Fangstück selbsttätig ihre sichernden Positionen einnehmen. Der Entriegelungsbolzen 17 schwenkt dadurch in seine erste Ausgangsposition zurück. Die beiden vorgesehenen Bodenschlösser 11 sind beispielsweise durch eine für den Benutzer zugängliche Entriegelungsstange gekoppelt, welche die zugeordneten Entriegelungsbolzen 17 miteinander verbindet.

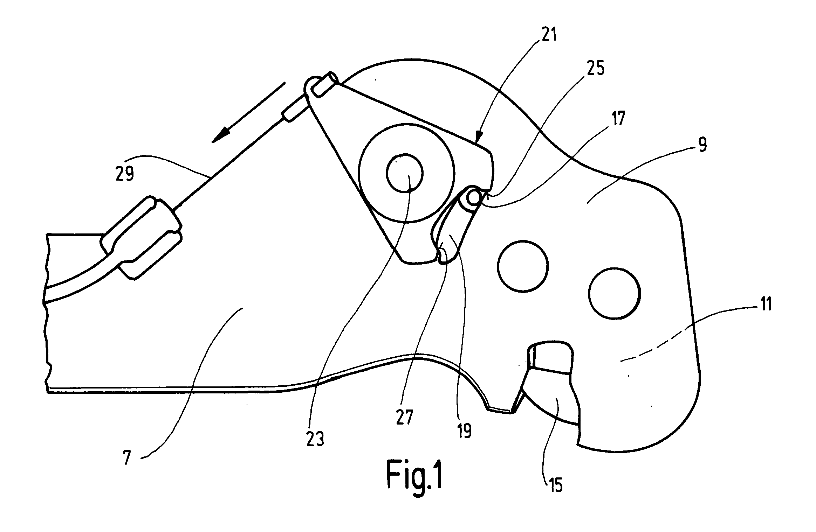

Eine Sperre 21 ist mittels eines Lagerbolzens 23 schwenkbar an der Sitzteilstruktur 7 gelagert. Die Grundform der Sperre 21 ist ein spitzwinkliges, gleichschenkliges Dreieck. Im Bereich der Basis dieses Dreiecks werden durch eine Einbuchtung ein oberer, erster Anschlag 25 und ein unterer, zweiter Anschlag 27 definiert, welche sich in der Ausgangsstellung jeweils ungefähr an einem Ende der Kulisse 19 befinden. In dem in Fig. 1 dargestellten verriegelten Zustand des Bodenschlosses 11 bedeutet dies, daß der erste Anschlag 25 an dem sich in seiner ersten Position befindenden Entriegelungsbolzen 17 von oben her anliegt.

An der Spitze der Sperre 21 ist ein Bowdenzug 29 (oder ein anderes Zugmittel) angebracht, welcher in den Bereich des Lehnenbeschlags 5 geführt ist und dort an einem Arm eines schwenkbaren Lehnenentriegelungshebels 31 angebracht ist. Ein ebenfalls am Lehnenentriegelungshebel 31 angebrachter, weiterer Bowdenzug oder dergleichen ist in Fortsetzung des Bowdenzuges 29 in die Lehne 4 zu einem für den Benutzer zugänglichen und betätigbaren Handhebel oder Handgriff geführt. Der Lehnenbeschlag 5 ist beispielsweise bezüglich der Sicherungselemente und Entriegelung in gleicher Weise wie das Bodenschloß 11 aufgebaut, d.h. zum Entriegeln muß ein Lehnenentriegelungsbolzen 33 geschwenkt werden, der vorzugsweise an einem weiteren Arm des Lehnenentriegelungshebels 31 angebracht ist. Wird der Lehnenentriegelungsbolzen 33 losgelassen, verriegelt der Lehnenbeschlag 5 jedoch selbsttätig im Unterschied zum Bodenschloß 11.

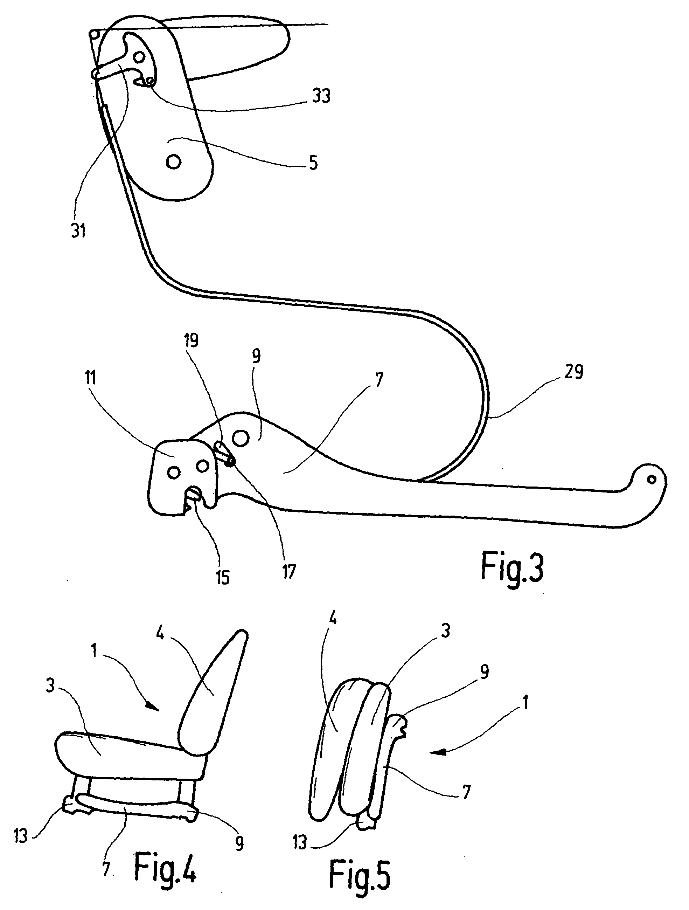

Die Sperre 21 dient als ein kombiniertes Sperrmittel und Abfragemittel, und zwar sowohl für das Bodenschloß 11 bzw. dessen Schaltzustand als auch für den Lehnenbeschlag 5, d.h. es liegt eine schloßgesteuerte Mißbrauchssicherung für den Lehnenbeschlag 5 vor. In einer in Fig. 4 schematisch dargestellten Gebrauchsstellung des Fahrzeugsitzes 1 ist das Sitzteil 3 näherungsweise horizontal angeordnet und an den hinteren Füßen 9 mittels der verriegelten Bodenschlösser 11 sowie an den vorderen Füßen 13 mit der Fahrzeugstruktur verriegelt, während die Lehne 4 leicht gegenüber der Vertikalen nach hinten geneigt und durch die Lehnenbeschläge 5 verriegelt ist.

Zum Übergang in eine aufrechte Packagestellung, die in Fig. 5 schematisch dargestellt ist, werden erst die Lehnenbeschläge 5 gemeinsam entriegelt, wobei jeweils die Lehnenentriegelungshebel 31 nach oben schwenken und dabei eine Zugkraft auf den Bowdenzug 29 ausüben. Der Bowdenzug 29 schwenkt dadurch die Sperre 21, so daß der zweite Anschlag 27 sich von unten her an den Entriegelungsbolzen 17 anlegt. In diesem Moment ist das Bodenschloß 11 - mangels Bewegungsmöglichkeit des Entriegelungsbolzens 17 - nicht entriegelbar, d.h. die Sperre 21 wirkt als Sperrmittel für das Bodenschloß 11. Zugleich wirkt sie aber auch als Abfragemittel für den Schaltzustand des Bodenschlosses 11, denn wenn bei entriegeltem Bodenschloß 11 der Entriegelungsbolzen 17 in seiner zweiten Position wäre, könnte aufgrund des anliegenden zweiten Anschlags 27 die Sperre 21 gar nicht geschwenkt werden, d.h. der Lehnenbeschlag 5 gar nicht entriegelt werden.

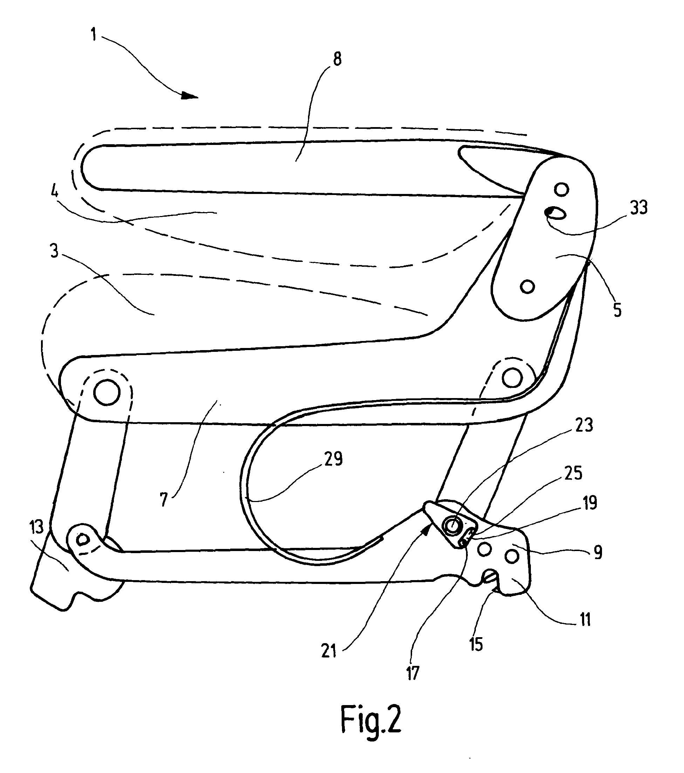

Sobald die Lehne 4 auf das Sitzteil 3 geschwenkt ist, kann der Handhebel oder -griff für die Lehnenentriegelung losgelassen werden. Die Lehnenbeschläge 5 verriegeln nun selbsttätig, wobei Weg für den Bowdenzug 29 freigegeben wird. Eine nicht näher dargestellte Feder schwenkt nun die Sperre 21 zurück gegen einen Anschlag oder dergleichen. In dieser Ausgangsposition der Sperre 21 ist die Kulisse 19 nun wieder für den Entriegelungsbolzen 17 frei zugänglich. Die beiden Bodenschlösser 11 werden nun gemeinsam entriegelt, d.h. jeder Entriegelungsbolzen 17 bewegt sich in der Kulisse 19 nach unten und gelangt in Anlage an den zweiten Anschlag 27. Diese Zwischenstellung des Fahrzeugsitzes 1 ist in den Fig. 2 und 3 dargestellt.

Nun kann das Sitzteil 3 um die am vorderen Fuß 13 vorgesehene Schwenkachse samt Lehne 4 nach oben geschwenkt werden, bis ungefähr eine vertikale Stellung, nämlich die Packagestellung, erreicht ist. Die Sperre 21 wirkt in allen Zwischenstellungen und in der Packagestellung wiederum als Abfragemittel für den Schaltzustand des Bodenschlosses 11 und auch als Sperrmittel für den Lehnenbeschlag 5. Solang das Bodenschloß 11 entriegelt ist, d.h. der Entriegelungsbolzen 17 sich in seiner zweiten Position befindet und am zweiten Anschlag 27 anliegt, kann die Sperre 21 nicht geschwenkt werden, d.h. der Lehnenbeschlag 5 nicht entriegelt werden.

Wenn das Sitzteil 3 zurückgeschwenkt wird und die Bodenschlösser 11 bei Kontakt mit den fahrzeugstrukturfesten Bolzen selbsttätig verriegeln, bewegt sich der Entriegelungsbolzen 17 zurück in seine erste Position. Nun erst können die Lehnenbeschläge 5 in der zuvor beschriebenen Weise entriegelt werden.

### Bezugszeichenliste

- 1: Fahrzeugsitz
- 3: Sitzteil
- 4: Lehne
- 5: Lehnenbeschlag
- 7: Sitzteilstruktur
- 8: Lehnenstruktur
- 9: hinterer Fuß
- 11: Bodenschloß
- 13: vorderer Fuß
- 15: Klinke
- 17: Entriegelungsbolzen, Entriegelungsmittel
- 19: Kulisse
- 21: Sperre, Sperrmittel
- 23: Lagerbolzen
- 25: erster Anschlag
- 27: zweiter Anschlag
- 29: Bowdenzug, Zugmittel
- 31: Lehnenentriegelungshebel
- 33: Lehnenentriegelungsbolzen

## Patentansprüche

1. Fahrzeugsitz, insbesondere Kraftfahrzeugsitz, mit einem Sitzteil (3), einer Lehne (4), die mittels wenigstens eines Lehnenbeschlags (5) relativ zum Sitzteil (3) schwenkbar ist, wenigstens einem Bodenschloß (11) zum lösbaren Verriegeln des Sitzteils (3) mit der Fahrzeugstruktur, und wenigstens einem Sperrmittel (21), das den Lehnenbeschlag (5) verriegelt hält, wenn das Bodenschloß (11) entriegelt ist, durch gekennzeichnet, daß das Sperrmittel (21) für den Lehnenbeschlag (5) am Bodenschloß (11) angeordnet ist.

2. Fahrzeugsitz nach Anspruch 1, **dadurch gekennzeichnet, daß** das Bodenschloß (11) mittels eines beweglichen Entriegelungsmittel (17) entriegelbar ist, welches mit dem relativ zum Bodenschloß (11) beweglich gelagerten Sperrmittel (21) zusammenwirkt.

3. Fahrzeugsitz nach Anspruch 1 oder 2, **dadurch gekennzeichnet, daß** das Bodenschloß (11) zwei stabile Schaltzustände aufweist und das Sperrmittel (21) zugleich ein Abfragemittel für den Schaltzustand des Bodenschlosses (11) bildet.

4. Fahrzeugsitz nach Anspruch 3, **dadurch gekennzeichnet, daß** das Entriegelungsmittel (17) in Abhängigkeit des Schaltzustandes des Bodenschlosses (11) unterschiedliche Positionen einnimmt und beim Wechsel des Schaltzustandes sich auf einer Bahn von einer Position in die andere bewegt.

5. Fahrzeugsitz nach einem der Ansprüche 2 bis 4, **dadurch gekennzeichnet, daß** das Sperrmittel (21) zwei Anschläge (25, 27) zum Zusammenwirken mit dem Entriegelungsmittel (17) aufweist.

6. Fahrzeugsitz nach Anspruch 5, **dadurch gekennzeichnet, daß** das Entriegelungsmittel (17) sich bei verriegeltem Bodenschloß (11) in einer ersten Position befindet und der erste Anschlag (25) bei verriegeltem Lehnenbeschlag (5) auf der von der zweiten Position abgewandten Seite am Entriegelungsmittel (17) anliegt.

7. Fahrzeugsitz nach Anspruch 6, **dadurch gekennzeichnet, daß** das Entriegelungsmittel (17) sich bei entriegeltem Bodenschloß (11) in einer zweiten Position befindet und der zweite Anschlag (27) bei verriegeltem Lehnenbeschlag (5) auf der von der ersten Position abgewandten Seite am Entriegelungsmittel (17) anliegt.

8. Fahrzeugsitz nach einem der Ansprüche 1 bis 7, **dadurch gekennzeichnet, daß** das Sperrmittel (21) zugleich für das Bodenschloß (11) wirksam ist und dieses verriegelt hält, wenn der Lehnenbeschlag (5) entriegelt ist.

9. Fahrzeugsitz nach Anspruch 7 und 8, **dadurch gekennzeichnet, daß** der zweite Anschlag (27) bei entriegeltem Lehnenbeschlag (5) auf der der zweiten Position zugewandten Seite am Entriegelungsmittel (17) anliegt.

10. Fahrzeugsitz nach einem der Ansprüche 1 bis 9, **dadurch gekennzeichnet, daß** das Sperrmittel (21) über ein Zugmittel (29) in Wirkverbindung mit einem Entriegelungshebel (31) des Lehnenbeschlags (5) steht.
